# EUROPEAN PATENT APPLICATION

(11) **EP 4 769 939 A1**
(43) Date of publication of application: **01.07.2026**
(21) Application number: 24864503.8
(22) Date of filing: 03.09.2024
(51) Int. Cl.: H02S 40/30

(54) **PID REPAIR CIRCUIT AND PID REPAIR METHOD FOR PHOTOVOLTAIC SYSTEM**

(30) Priority: 13.09.2023 CN 202311182501
(71) Applicant: Shanghai Sigeyuan Intelligent Technology Co., Ltd, Shanghai 200120 (CN)
(72) Inventor: CHEN, Runtian, Shanghai 200120 (CN); CAI, Mingjun, Shanghai 200120 (CN); BAO, Xinkang, Shanghai 200120 (CN); YANG, Chen, Shanghai 200120 (CN)
(74) Representative: Bayramoglu et al.
(86) International application number: PCT/CN2024/116588
(87) International publication number: WO 2025/055781

(57) **Abstract**

Provided are a potential induced degradation (PID) repair circuit and PID repair method for a photovoltaic (PV) system. The PV system includes a solar cell module, an energy storage module, a direct current direct current (DCDC) boost circuit, and an inverter circuit; the PID repair circuit includes a DC power supply and an isolation circuit; after the DC power supply is processed by the isolation circuit, one end of the isolation circuit is connected to a positive terminal PV+ or a negative terminal PV- of the solar cell module, and another end of the isolation circuit is connected to a ground terminal PE; and a first switch is disposed on a connection path between the solar cell module and the energy storage module; PID repair is performed on the solar cell module by applying a negative voltage to the positive terminal PV+ of the solar cell module or a positive voltage to the negative terminal PV- of the solar cell module via the DC power supply; and a connection path between the solar cell module and the inverter circuit is disconnected during the PID repair. This application can prevent an internal short circuit caused by the inverter circuit during the PID repair, thereby effectively guaranteeing the operational safety of the PV system.

## Description

### TECHNICAL FIELD

The present disclosure relates to the technical field of photovoltaic (PV) control, and in particular to a potential induced degradation (PID) repair circuit and PID repair method for a PV system.

### BACKGROUND TECHNOLOGY

Potential induced degradation (PID) refers to the phenomenon that, under the long-term action of a high voltage in the photovoltaic (PV) system, a leakage current occurs between the glass substrate and the encapsulation material of the solar panel. This causes a large amount of charges to accumulate on the surface of the solar panel, deteriorating the surface passivation effect of the cells, and leading to a decrease in the overall output power of the PV module. To suppress the power degradation of the solar panel, the industry generally applies a positive voltage to the negative terminal PV- of the solar panel relative to the ground terminal PE or a negative voltage to the positive terminal PV+ of the solar panel relative to the ground terminal PE.

The above PID repair is usually performed at night, because the PV solar panel does not operate at night and the alternating current (AC) relay remains open rather than closed, allowing the above PID repair to be performed without forming a closed short-circuit path. However, for a PV system with an energy storage module, the AC relay is closed because the energy storage module supplies power at night. When the neutral (N) line of the inverter circuit of the PV system is grounded, performing the above PID repair causes a short circuit between the power supply in the PID repair circuit and the inverter circuit. This may result in device damage or trigger residual current device (RCD) protection of the inverter, rendering the inverter inoperable. The PID repair may fail, and the PV system may malfunction or even suffer equipment damage. Consequently, the energy storage module must be disconnected during PID repair.

Therefore, maintaining a safe and stable operation of the PV system during PID repair is a technical problem to be solved by the present disclosure.

### CONTENT OF THE INVENTION

To overcome at least one of the above defects, a main objective of the present disclosure is to provide a potential induced degradation (PID) repair circuit and PID repair method for a photovoltaic (PV) system, which ensure safe, efficient, and stable PID repair at night.

In order to achieve the above objective, the present disclosure adopts the following technical solutions:
The present disclosure provides a PID repair circuit for a PV system, where the PV system includes a solar cell module, an energy storage module, a direct current direct current (DCDC) boost circuit, and an inverter circuit; a DC output of the solar cell module is connected to the inverter circuit via the DCDC boost circuit to form an alternating current (AC) output; the energy storage module is connected to the inverter circuit to form an AC output; the PID repair circuit includes a DC power supply and an isolation circuit; after the DC power supply is processed by the isolation circuit, one end of the isolation circuit is connected to a positive terminal PV+ or a negative terminal PV- of the solar cell module, and another end of the isolation circuit is connected to a ground terminal PE; and a first switch is disposed on a connection path between the DCDC boost circuit and the energy storage module.

An output side of the PID repair circuit is connected to the positive terminal PV+ or the negative terminal PV- of the solar cell module, with a connection point denoted as a repair access point of the PID repair circuit; and the first switch is disposed on a first connection path between the repair access point and the energy storage module.

According to an implementation of the present disclosure, the PV system includes at least one solar cell string; each solar cell string includes one solar cell module or at least two solar cell modules connected in series or in parallel; each solar cell string is connected to the DCDC boost circuit via a DC bus; and the repair access point is located on a second connection path between the solar cell string and the energy storage module.

According to an implementation of the present disclosure, the PV system includes at least one DCDC boost circuit; each solar cell string is connected to a respective DCDC boost circuit and then connected in parallel to a DC bus; the DC bus is further connected to the energy storage module; the output side of the PID repair circuit is connected to each solar cell string, thereby forming a plurality of repair access points; and each of the repair access points is located on the second connection path between the solar cell string and the energy storage module.

According to an implementation of the present disclosure, there are a plurality of PID repair circuits; each of the repair access points is connected to at least one PID repair circuit; and the first switch is disposed on a third connection path defined between a connection point of a DC conversion circuit and the DC bus and the repair access point.

According to an implementation of the present disclosure, the first switch is connected in parallel to a bleeder circuit configured to discharge a voltage across the first switch after PID repair is completed.

According to an implementation of the present disclosure, the bleeder circuit includes at least one bleeder element; and each bleeder element is connected in series and then connected in parallel to the first switch; and
alternatively, a bleeder switch is connected in series in a connection path formed by connecting each bleeder resistor in series.

According to an implementation of the present disclosure, the bleeder circuit includes at least two bleeder elements; a first bleeder branch formed by connecting at least one bleeder element in series includes one end connected to one end of the first switch and another end grounded; and a second bleeder branch formed by connecting at least one bleeder element in series includes one end connected to another end of the first switch and another end grounded; and
alternatively, a bleeder switch is connected in series in the first bleeder branch or the second bleeder branch.

According to an implementation of the present disclosure, the bleeder circuit is configured to absorb the voltage across the first switch via an inductor in the DCDC boost circuit and discharge energy to a bus capacitor.

According to an implementation of the present disclosure, the first switch is a unidirectional conduction device configured to enable unidirectional conduction of a second connection path from a solar cell string to the energy storage module.

According to an implementation of the present disclosure, the first switch is an electromagnetic relay, a DC contactor, an AC contactor, a semiconductor device insulated gate bipolar transistor (IGBT) or a metal-oxide-semiconductor field-effect transistor (MOSFET).

According to an implementation of the present disclosure, the first switch is a single-pole double-throw switch, including one static contact and two moving contacts; and the static contact is connected to the solar cell module, one moving contact serves as the repair access point, and the other moving contact is connected to the energy storage module.

According to an implementation of the present disclosure, the DC power supply includes a positive electrode connected to the negative terminal PV- of the solar cell module and a negative electrode connected to the ground terminal PE.

According to an implementation of the present disclosure, the first switch is connected in series on a DC bus where the positive terminal PV+ or the negative terminal PV- of the solar cell module is connected to the energy storage module, or on a DC bus where the positive terminal PV+ or the negative terminal PV- of the solar cell module is connected to the DCDC boost circuit.

According to an implementation of the present disclosure, the DC power supply includes a negative electrode connected to the positive terminal PV+ of the solar cell module and a positive electrode connected to the ground terminal PE.

According to an implementation of the present disclosure, the first switch is connected in series on a DC bus where the positive terminal PV+ or the negative terminal PV- of the solar cell module is connected to the energy storage module, or on a DC bus where the positive terminal PV+ or the negative terminal PV- of the solar cell module is connected to the DCDC boost circuit.

According to an implementation of the present disclosure, the first switch is an electromagnetic relay, a DC contactor, an AC contactor, a semiconductor device insulated gate bipolar transistor (IGBT) or a metal-oxide-semiconductor field-effect transistor (MOSFET).

According to an implementation of the present disclosure, the DC power supply is connected to the positive or negative terminal of the solar cell module via a connection branch; and the connection branch is provided with a second switch and a third switch configured to control on and off of the connection branch.

According to an implementation of the present disclosure, the DC power supply is an uninterruptible power supply (UPS) or a storage battery; alternatively, the DC power supply is a power supply derived by a DC conversion of a DC bus; and alternatively, the DC power supply is a power supply derived by an inversion and a DC conversion of a power grid.

According to an implementation of the present disclosure, the PV system further includes a residual current device (RCD) circuit; and the RCD circuit is disposed on an output line of the inverter circuit to provide leakage protection for the circuit.

In particular, the present disclosure further provides a PID repair method for a PV system, where PID repair is performed on a solar cell module by applying a negative voltage to a positive terminal PV+ of the solar cell module or a positive voltage to a negative terminal PV-of the solar cell module via a DC power supply, and a connection path between the solar cell module and an inverter circuit is disconnected during PID repair.

According to an implementation of the present disclosure, the method specifically includes following working steps:
opening a first switch based on a control instruction for starting the PID repair;
detecting, by a PID repair circuit, an output voltage of the PID repair circuit in real time during operation, increasing the output voltage until a target voltage value is reached, and maintaining the output voltage to perform the PID repair on the solar cell module; and
starting a bleeder circuit after determining that the PID repair is completed, and closing an isolation switch after determining that discharge is completed.

According to an implementation of the present disclosure, the PID repair circuit keeps detecting the output voltage during operation, compares the output voltage with an output reference voltage, and increases the output reference voltage by a preset voltage step if a difference between the output voltage and the output reference voltage is within a range of a voltage threshold, until the output voltage reaches the target voltage value.

According to an implementation of the present disclosure, a process of the output voltage following the output reference voltage is detected; PID voltage follow-up timing is started if the difference between the output voltage and the output reference voltage exceeds the voltage threshold; a fault instruction is sent and the PID repair is stopped if a duration of the PID voltage follow-up timing reaches a preset follow-up duration threshold; and the output voltage continues to be increased to follow the output reference voltage if the duration of the PID voltage follow-up timing does not reach the preset follow-up duration threshold.

According to an implementation of the present disclosure, a condition for determining that the PID repair is completed is that after the output voltage or the output reference voltage reaches the target voltage value, timing is performed for a duration for maintaining operation of the PID repair circuit until a repair duration reaches a preset maintenance duration threshold.

According to an implementation of the present disclosure, the energy storage module remains connected to the inverter circuit during the PID repair.

Compared with the prior art, the PID repair circuit and PID repair method for a PV system provided by the present disclosure have the following advantages and beneficial effects:

The PID repair circuit for a PV system according to the present disclosure is simple in circuit structure. It can physically disconnect the connection between the PV module and the inverter circuit during PID repair, such that internal short circuit caused by the inverter circuit can be prevented during PID repair, thereby effectively guaranteeing the operational safety of the PV system.

### DESCRIPTION OF THE DRAWINGS

Some specific embodiments of the present disclosure will be described in detail below in an illustrative rather than restrictive manner with reference to the drawings. The same reference numerals in the drawings refer to like or similar components or parts. Those skilled in the art should understand that the drawings are not plotted to scale. In the drawings:
FIG. 1 is a schematic structural diagram of a PID repair circuit for a PV system according to an embodiment of the present disclosure;
FIG. 2 is a schematic structural diagram of a PID repair circuit for a PV system according to another embodiment of the present disclosure;
FIG. 3 is a schematic structural diagram of a PID repair circuit for a PV system according to an embodiment of the present disclosure, supplemented with a circuit diagram of an isolation circuit;
FIG. 4 is a schematic structural diagram of a PID repair circuit for a PV system according to an embodiment of the present disclosure, supplemented with a circuit diagram of a DCDC boost circuit;
FIG. 5 is a schematic structural diagram of a PID repair circuit for a PV system according to an embodiment of the present disclosure;
FIG. 6 is a schematic structural diagram of a PID repair apparatus for a PV system according to Embodiment 7 of the present disclosure;
FIG. 7 is a schematic structural diagram of a PID repair apparatus for a PV system according to Embodiment 8 of the present disclosure;
FIG. 8 is a schematic structural diagram of a PID repair apparatus for a PV system according to Embodiment 9 of the present disclosure;
FIG. 9 is a schematic structural diagram of a PID repair apparatus for a PV system according to Embodiment 10 of the present disclosure;
FIG. 10 is a schematic structural diagram of a PID repair apparatus for a PV system according to Embodiment 11 of the present disclosure;
FIG. 11 is a schematic structural diagram of a PID repair apparatus for a PV system according to Embodiment 12 of the present disclosure;
FIG. 12 is a schematic structural diagram of a PID repair apparatus for a PV system according to Embodiment 13 of the present disclosure;
FIG. 13 is a schematic structural diagram of a PID repair apparatus for a PV system according to Embodiment 14 of the present disclosure;
FIG. 14 is a schematic structural diagram of a PID repair apparatus for a PV system according to Embodiment 15 of the present disclosure;
FIG. 15 is a schematic structural diagram of a PID repair apparatus for a PV system according to Embodiment 16 of the present disclosure;
FIG. 16 is a schematic structural diagram of a PID repair apparatus for a PV system according to Embodiment 17 of the present disclosure;
FIG. 17 is a schematic structural diagram of a PID repair apparatus for a PV system according to Embodiment 18 of the present disclosure;
FIG. 18 is a schematic structural diagram of a PID repair apparatus for a PV system after completion of repair according to Embodiment 19 of the present disclosure, with a common-mode capacitor;
FIG. 19 is a schematic structural diagram of discharging a first switch according to Embodiment 19 of the present disclosure;
FIG. 20 is another schematic structural diagram of discharging a first switch according to Embodiment 19 of the present disclosure;
FIG. 21 is still another schematic structural diagram of discharging a first switch according to Embodiment 19 of the present disclosure;
FIG. 22 is a schematic diagram of controlling a current of inductor L1 when discharging a first switch via the inductor in a DC conversion circuit according to Embodiment 19 of the present disclosure;
FIG. 23 is another schematic diagram of controlling a current of inductor L1 when discharging a first switch via the inductor in a DC conversion circuit according to Embodiment 19 of the present disclosure; and
FIG. 24 is a flowchart of a PID repair method for a PV system according to Embodiment 20 of the present disclosure.

Reference Numerals: 1. solar cell module; 2. energy storage module; 3. DCDC boost circuit; 4. inverter circuit; 5. DC power supply; and 6. isolation circuit.

### SPECIFIC IMPLEMENTATIONS

The following clearly and completely describes the technical solutions of the present disclosure with reference to drawings. Apparently, the described embodiments are merely some rather than all of the embodiments of the present disclosure. All other embodiments obtained by those of ordinary skill in the art based on the embodiments of the present disclosure without creative efforts shall fall within the protection scope of the present disclosure.

In addition, the technical features involved in the various implementations of the present disclosure described below may be combined with each other as long as they do not constitute a conflict with each other.

### Embodiment 1:

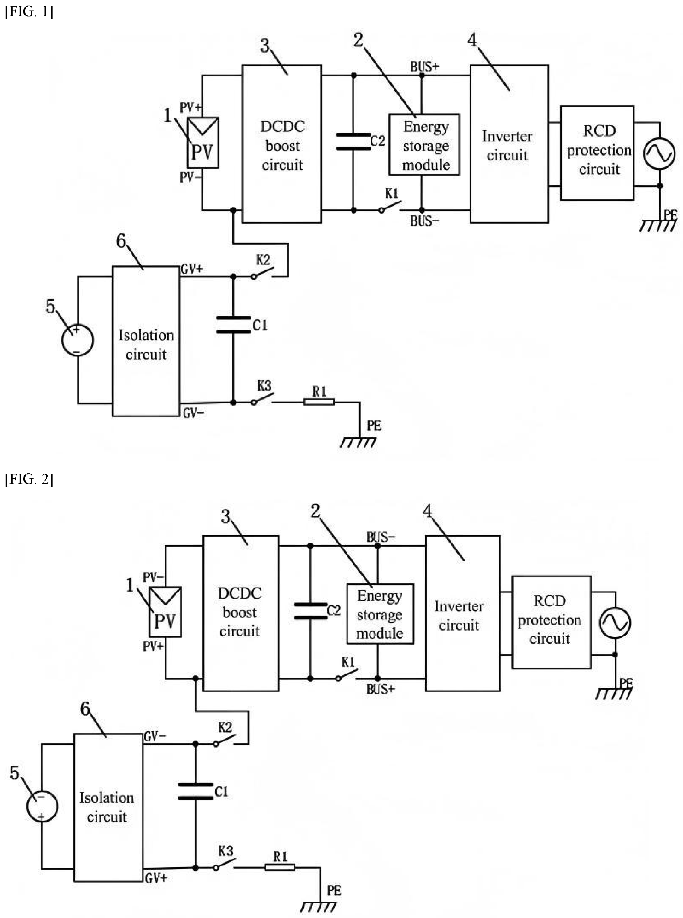

This embodiment describes a PID repair circuit for a PV system. As shown in FIG. 1, the PV system includes solar cell module 1, energy storage module 2, DCDC boost circuit 3, and inverter circuit 4. A DC output of the solar cell module 1 is connected to the inverter circuit 4 via the DCDC boost circuit 3 to form an AC output, and the energy storage module 2 is connected to the inverter circuit 4 to form an AC output. Positive terminal BUS+ of the energy storage module 2 corresponds to positive terminal PV+ of the solar cell module 1 and is connected to a DC output bus of the solar cell module 1, and negative terminal BUS- of the energy storage module 2 corresponds to negative terminal PV- of the solar cell module 1 and is connected to a DC output bus of the solar cell module 1. An output line of the inverter circuit 4 is connected to a RCD protection circuit configured to provide leakage protection for the circuit, and a neutral (N) line of the AC output is connected to ground terminal PE.

The PID repair circuit includes DC power supply 5 and isolation circuit 6. After the DC power supply 5 is processed by the isolation circuit 6, positive terminal GV+ connected to a positive electrode of the DC power supply 5 is connected to the negative terminal PV- of the solar cell module 1, and negative terminal GV- connected to a negative electrode of the DC power supply 5 is connected to the ground terminal PE. First switch K1 is disposed on a connection path between the solar cell module 1 and the energy storage module 2. In this embodiment, the first switch K1 is connected in series on the DC output bus between the negative terminal PV- of the solar cell module 1 and the negative terminal BUS- of the energy storage module 2.

In this embodiment, in order to safely and efficiently extract charges at a solar panel, capacitor C1 is connected between the positive terminal GV+ and the negative terminal GV-, and switch K2, switch K3, and resistor R1 are further disposed for convenient and safe control. Specifically, the positive terminal GV+ is connected to a first terminal of the switch K2 and a first terminal of the capacitor C1. The negative terminal GV- is connected to a second terminal of the capacitor C1 and a first terminal of the switch K3. A second terminal of the switch K2 is connected to the negative terminal PV- of the solar cell module 1. A second terminal of the switch K3 is connected to a first terminal of the resistor R1. A second terminal of the resistor R1 is connected to the ground terminal PE.

In addition, bus capacitor C2 may be connected between the two DC output buses. A first plate of the bus capacitor C2 is electrically connected to the positive terminal BUS+ of the energy storage module 2, a second plate of the bus capacitor C2 is connected to a first terminal of the first switch K1, the first terminal of the first switch K1 is further connected to the negative terminal PV- of the solar panel, and a second terminal of the first switch K1 is electrically connected to the negative terminal BUS- of the energy storage module 2.

During PID repair of the solar cell module 1 of the PV system, the switch K2 and the switch K3 are controlled to be closed, and the first switch K1 is controlled to be open. In this way, a path from the positive terminal GV+ connected to the positive electrode of the DC power supply 5 to the negative terminal PV- of the solar cell module 1 and a path from the capacitor C1 to the ground terminal PE are formed, thereby forming a PID repair loop of the solar cell module 1, and the resistor R1 plays a role of safety protection.

During repair, the first switch K1 remains open, such that a connection path between the solar cell module 1 and the energy storage module 2 as well as the inverter circuit 4 can be disconnected, thereby preventing a short circuit from being caused inside the PID repair circuit by grounding. Even if an AC output is generated by DC-to-AC conversion of the energy storage module 2, operation of the PID repair circuit is not affected, thereby effectively protecting the operational safety of the PID repair circuit.

### Embodiment 2:

This embodiment describes a PID repair circuit for a PV system. Compared with Embodiment 1, a main difference lies in different polarities of connection terminals between the PID repair circuit and the solar cell module 1.

Specifically, as shown in FIG. 2, the PV system includes solar cell module 1, energy storage module 2, DCDC boost circuit 3, and inverter circuit 4. A DC output of the solar cell module 1 is connected to the inverter circuit 4 via the DCDC boost circuit 3 to form an AC output, and the energy storage module 2 is connected to the inverter circuit 4 to form an AC output. Positive terminal BUS+ of the energy storage module 2 corresponds to positive terminal PV+ of the solar cell module 1 and is connected to a DC output bus of the solar cell module 1, and negative terminal BUS- of the energy storage module 2 corresponds to negative terminal PV- of the solar cell module 1 and is connected to a DC output bus of the solar cell module 1. An output line of the inverter circuit 4 is connected to an RCD protection circuit configured to provide leakage protection for the circuit, and an N line of the AC output is connected to ground terminal PE.

The PID repair circuit includes DC power supply 5 and isolation circuit 6. After the DC power supply 5 is processed by the isolation circuit 6, negative terminal GV- connected to a negative electrode of the DC power supply 5 is connected to the positive terminal PV+ of the solar cell module 1, and positive terminal GV+ connected to a positive electrode of the DC power supply 5 is connected to the ground terminal PE. First switch K1 is disposed on a connection path between the solar cell module 1 and the energy storage module 2. In this embodiment, the first switch K1 is connected in series on the DC output bus between the positive terminal PV+ of the solar cell module 1 and the positive terminal BUS+ of the energy storage module 2.

In this embodiment, in order to safely and efficiently extract charges at a solar panel, capacitor C1 is connected between the negative terminal GV- and the positive terminal GV+, and switch K2, switch K3, and resistor R1 are further disposed for convenient and safe control. Specifically, the negative terminal GV- is connected to a first terminal of the switch K2 and a first terminal of the capacitor C1. The positive terminal GV+ is connected to a second terminal of the capacitor C1 and a first terminal of the switch K3. A second terminal of the switch K2 is connected to the positive terminal PV+ of the solar cell module 1. A second terminal of the switch K3 is connected to a first terminal of the resistor R1. A second terminal of the resistor R1 is connected to the ground terminal PE.

In addition, bus capacitor C2 may be connected between the two DC output buses. A first plate of the bus capacitor C2 is electrically connected to the negative terminal BUS- of the energy storage module 2, a second plate of the bus capacitor C2 is connected to a first terminal of the first switch K1, the first terminal of the first switch K1 is further connected to the positive terminal PV+ of the solar panel, and a second terminal of the first switch K1 is electrically connected to the positive terminal BUS+ of the energy storage module 2.

During PID repair of the solar cell module 1 of the PV system, the switch K2 and the switch K3 are controlled to be closed, and the first switch K1 is controlled to be open. In this way, a path from the negative terminal GV- connected to the negative electrode of the DC power supply 5 to the positive terminal PV+ of the solar cell module 1 and a path from the capacitor C1 to the ground terminal PE are formed, thereby forming a PID repair loop of the solar cell module 1, and the resistor R1 plays a role of safety protection.

During repair, the first switch K1 remains open, such that a connection path between the solar cell module 1 and the energy storage module 2 as well as the inverter circuit 4 can be disconnected, thereby preventing a short circuit from being caused inside the PID repair circuit by grounding. Even if an AC output is generated by DC-to-AC conversion of the energy storage module 2, operation of the PID repair circuit is not affected, thereby effectively protecting the operational safety of the PID repair circuit.

### Embodiment 3:

The isolation circuit 6 may be half-wave isolation circuit 6, full-wave isolation circuit 6, full-wave bridge isolation circuit 6, or voltage-doubling isolation circuit 6. In this embodiment, the half-wave isolation circuit 6 is taken as an example.

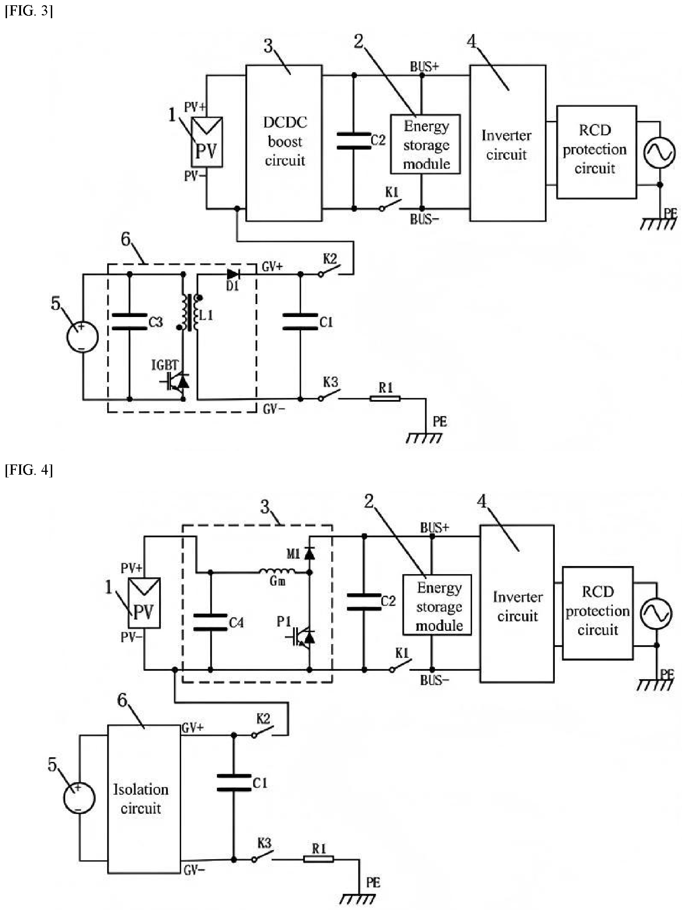

A main structure of the PID repair circuit for a PV system according to this embodiment is the same as that of Embodiment 1. The isolation circuit 6 is half-wave isolation circuit 6. As shown in FIG. 3, the half-wave isolation circuit 6 includes filter capacitor C3, transformer coil L1, an insulated gate bipolar transistor (IGBT), and diode D1. A positive electrode of the DC power supply 5 is electrically connected to a first plate of the filter capacitor C3 and a non-dotted terminal of a primary coil of the transformer coil L1. A negative electrode of the DC power supply 5 is electrically connected to a second plate of the filter capacitor C3 and an emitter of the IGBT. A collector of the IGBT is electrically connected to a dotted terminal of the primary coil of the transformer coil L. A gate of the IGBT is configured to receive a control signal so as to be turned on in response during operation. A dotted terminal of a secondary coil of the transformer coil L1 is electrically connected to a positive electrode of the diode, and a negative electrode of the diode D1 serves as the positive terminal GV+. A non-dotted terminal of the secondary coil of the transformer coil LL1 serves as the negative terminal GV-.

### Embodiment 4:

The DCDC boost circuit 3 can effectively suppress electromagnetic interference between power supplies, reduce or eliminate interference between AC and DC voltages, and prevent overvoltage damage, heat loss, and damage to low-voltage components. It can also effectively protect electrical equipment and personnel from damage to low-voltage components by operating voltage, and avoid overvoltage damage, heat loss, and damage to low-voltage components. It can be understood that any circuit capable of isolating power supplies shall fall within the protection scope of the present disclosure, and a typical circuit structure is taken as an example in this embodiment.

A main structure of the PID repair circuit for a PV system according to this embodiment is the same as that of Embodiment 1. As shown in FIG. 4, the DCDC boost circuit 3 includes capacitor C4, inductor Gm, switching transistor P1, and diode M1. A first plate of the first capacitor C4 and a first terminal of the inductor Gm are electrically connected to the positive terminal PV+ of the solar cell module 1. A positive electrode of the diode M1 and a first terminal of the switching transistor P1 are electrically connected to a second terminal of the inductor Gm. A negative electrode of the diode M1 is electrically connected to the positive terminal BUS+ of the energy storage module 2. A second plate of the capacitor C4 and a second terminal of the switching transistor P1 are electrically connected to the negative terminal PV- of the solar cell module 1.

Optionally, the switching transistor P1 provided in this embodiment may be an IGBT, and the gates of the switching transistors are electrically connected to respective corresponding control signals so as to be controlled to be turned on or off during operation.

### Embodiment 5:

A main structure of the PID repair circuit for a PV system according to this embodiment is the same as that of Embodiment 1, and a difference lies in that two connection branches are added to charge a bus capacitor via the DC power supply 5. The DC power supply 5 can also be charged via the solar cell module 1 or the energy storage module 2 if necessary, such that the DC power supply 5 has sufficient electric energy during PID repair.

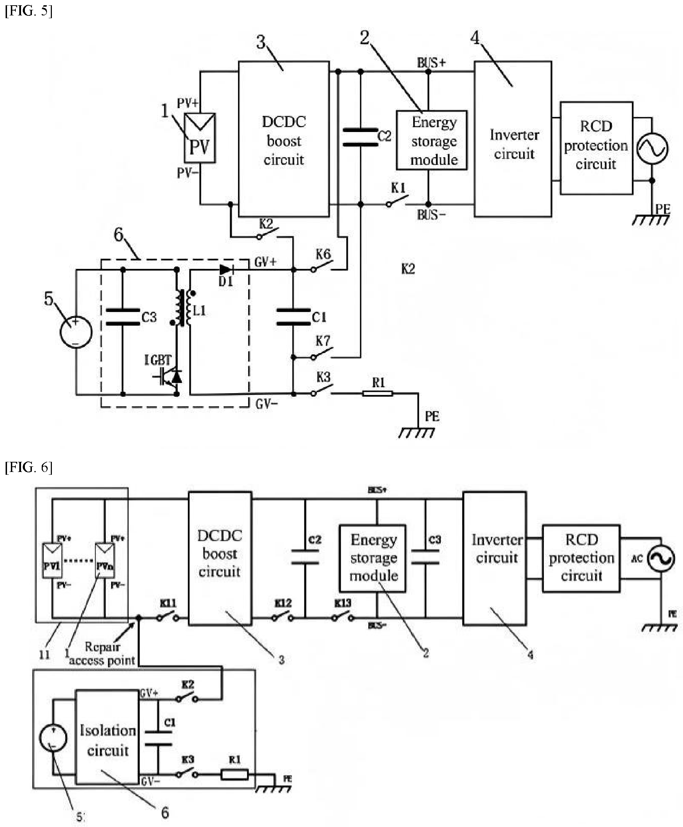

Specifically, as shown in FIG. 5, the positive terminal GV+ of the isolation circuit 6 is connected to a first terminal of second switch K6. A second terminal of the second switch K6 is connected to the positive terminal BUS+ of the energy storage module 2. The negative terminal GV- of the isolation circuit 6 is connected to a first terminal of third switch K7. A second terminal of the third switch K7 is connected to a first terminal of the first switch K1. A second terminal of the first switch K1 is connected to the negative terminal BUS- of the energy storage module 2. Therefore, when the switch K2 is open and the second switch K6 and the third switch K7 are closed, the bus capacitor C2 can be charged via the DC power supply 5.

Optionally, the DC power supply 5 is an uninterruptible power supply (UPS) or a storage battery, and the DC power supply 5 can be charged via the solar cell module 1 or the energy storage module 2. Alternatively, the DC power supply is a power supply derived by a DC conversion of a DC bus. Alternatively, the DC power supply is a power supply derived by an inversion and a DC conversion of a power grid.

In addition, electric energy generated by the solar cell module 1 is DC, while electric energy required for household or industrial use is AC. The inverter circuit 4 is configured to convert a DC output of the solar cell module 1 or the energy storage module 2 into an AC output, such that the electric energy generated by the solar cell module 1 can be used for household or industrial applications. Common inverter circuits 4 include half-bridge inverter circuit 4 and full-bridge inverter circuit 4. This part does not relate to a protection core of the present disclosure, and a conventional inverter circuit 4 structure can be adopted, which is not elaborated herein.

Optionally, the first switch is an electromagnetic relay, a DC contactor, an AC contactor, a semiconductor device IGBT or a metal-oxide-semiconductor field-effect transistor (MOSFET). The other switches may also be any one of an electromagnetic relay, a DC contactor, an AC contactor, a semiconductor device IGBT or a MOSFET, as long as controllable switching can be realized.

### Embodiment 6:

This embodiment further provides a PID repair method for a PV system. PID repair is performed on solar cell module 1 by applying a negative voltage to positive terminal PV+ of the solar cell module 1 or a positive voltage to negative terminal PV- of the solar cell module 1 via DC power supply 5, and a connection path between the solar cell module 1 and inverter circuit 4 is disconnected during PID repair.

During PID repair, the energy storage module 2 remains connected to the inverter circuit 4. Since the connection path between the solar cell module 1 and the inverter circuit 4 is disconnected, there is no need to worry about an internal short circuit caused by grounding of a neutral line of an inverter module.

### Embodiment 7:

This embodiment describes a PID repair circuit for a PV system. As shown in FIG. 6, the PV system includes solar cell modules 1, energy storage module 2, DC conversion circuit 3, and inverter circuit 4. The inverter circuit 4 is a non-isolated circuit. A DC output of the solar cell module 1 is connected to the inverter circuit 4 via the DC conversion circuit 3 to form an AC output, and the energy storage module 2 is connected to the inverter circuit 4 to form an AC output. Positive terminal BUS+ of the energy storage module 2 corresponds to positive terminal PV+ of the solar cell module 1 and is connected to a DC output bus of the solar cell module 1, and negative terminal BUS- of the energy storage module 2 corresponds to negative terminal PV- of the solar cell module 1 and is connected to a DC output bus of the solar cell module 1. An output line of the inverter circuit 4 is connected to an RCD protection circuit configured to provide leakage protection for the circuit, and an N line of the AC output is connected to ground terminal PE.

The PID repair circuit includes DC power supply 5 and isolation circuit 6. After the DC power supply 5 is processed by the isolation circuit 6, positive terminal GV+ connected to a positive electrode of the DC power supply 5 is connected to the negative terminal PV- of the solar cell module 1, and negative terminal GV- connected to a negative electrode of the DC power supply 5 is connected to the ground terminal PE. A connection point where the positive terminal GV+ is connected to the negative terminal PV- is denoted as a repair access point of the PID repair circuit, and a first switch is disposed on a connection path between the solar cell module 1 and the inverter circuit 4. In this embodiment, due to the existence of the energy storage module 2, the first switch is connected in series on a first connection path between the repair access point of the solar cell module 1 and the energy storage module 2.

In this embodiment, there are a plurality of solar cell modules 1. The solar cell modules 1 are connected in parallel to form solar cell string 11. The solar cell string 11 is connected to the DCDC boost circuit 3 via a DC bus. The repair access point is located on a second connection path between the solar cell string 11 and the inverter circuit 4. In this embodiment, the repair access point is located on the DC bus between the negative terminal PV- of the solar cell string 11 and the DC conversion circuit 3.

In this embodiment, the first switch includes at least one switch, and the isolator may be disposed at any one of switch K11, switch K12, and switch K13 shown in FIG. 6. Specifically, the switch K11 is disposed between the repair access point and the DC conversion circuit 3, the switch K12 is disposed between the DC conversion circuit 3 and a bus capacitor C2, and the switch K13 is disposed between the bus capacitor C2 and the energy storage module 2. As long as the first switch at any one of the three switch positions, namely the switch K11, the switch K12, and the switch K13, is open, the connection between the repair access point and the energy storage module 2 as well as the inverter circuit 4 can be disconnected.

In this embodiment, in order to safely and efficiently extract charges at a solar panel, capacitor C1 is connected between the positive terminal GV+ and the negative terminal GV-, and switch K2, switch K3, and resistor R1 are further disposed for convenient and safe control. Specifically, the positive terminal GV+ is connected to a first terminal of the switch K2 and a first terminal of the capacitor C1. The negative terminal GV- is connected to a second terminal of the capacitor C1 and a first terminal of the switch K3. A second terminal of the switch K2 is connected to the negative terminal PV- of the solar cell module 1. A second terminal of the switch K3 is connected to a first terminal of the resistor R1. A second terminal of the resistor R1 is connected to the ground terminal PE.

In addition, the bus capacitor C2 and bus capacitor C3 may be connected between the two DC output buses. The bus capacitor C2 and the bus capacitor C3 are respectively connected in parallel to the positive and negative DC output buses. The bus capacitor C2 is disposed close to the DC conversion circuit 3 and located between the DC conversion circuit 3 and the energy storage module 2 to stabilize an output voltage of the DC conversion circuit 3. The bus capacitor C3 is disposed close to the inverter circuit 4 and located between the energy storage module 2 and the inverter circuit 4, and mainly functions to stabilize a DC-side voltage of the inverter circuit 4. In addition, generally, the bus capacitor C2 and the bus capacitor C3 are respectively configured as a low-capacitance bus capacitor and a high-capacitance bus capacitor. Alternatively, the bus capacitor C2 and the bus capacitor C3 may be combined into one and disposed at position C2 or C3 in the circuit.

During PID repair of the solar cell module 1 of the PV system, the switch K2 and the switch K3 are controlled to be closed, and the first switch is controlled to be open. In this way, a path from the positive terminal GV+ connected to the positive electrode of the DC power supply 5 to the negative terminal PV- of the solar cell module 1 and a path from the capacitor C1 to the ground terminal PE are formed, thereby forming a PID repair loop of the solar cell module 1, and the resistor R1 plays a role of safety protection.

During repair, the first switch remains open, such that a connection path between the solar cell module 1 and the energy storage module 2 as well as the inverter circuit 4 can be disconnected, thereby preventing a short circuit from being caused inside the PID repair circuit by grounding. Even if an AC output is generated by DC-to-AC conversion of the inverter circuit 4, operation of the PID repair circuit is not affected, thereby effectively protecting the operational safety of the PID repair circuit.

### Embodiment 8:

This embodiment describes a PID repair circuit for a PV system. Compared with Embodiment 7, a main difference lies in different polarities of connection terminals between the PID repair circuit and the solar cell module 1.

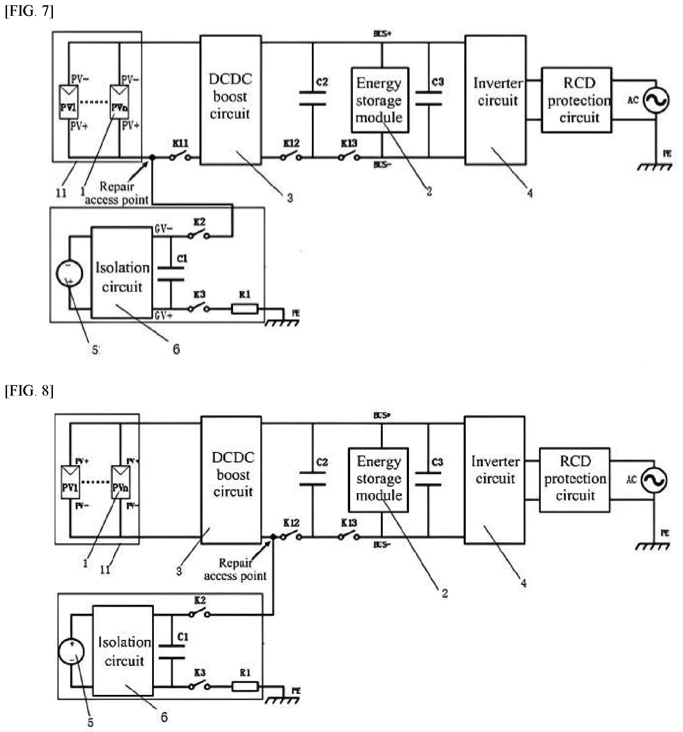

Specifically, as shown in FIG. 7, the PV system includes solar cell module 1, energy storage module 2, DC conversion circuit 3, and inverter circuit 4. A DC output of the solar cell module 1 is connected to the inverter circuit 4 via the DC conversion circuit 3 to form an AC output, and the energy storage module 2 is connected to the inverter circuit 4 to form an AC output. Positive terminal BUS+ of the energy storage module 2 corresponds to positive terminal PV+ of the solar cell module 1 and is connected to a DC output bus of the solar cell module 1, and negative terminal BUS- of the energy storage module 2 corresponds to negative terminal PV- of the solar cell module 1 and is connected to a DC output bus of the solar cell module 1. An output line of the inverter circuit 4 is connected to an RCD protection circuit configured to provide leakage protection for the circuit, and an N line of the AC output is connected to ground terminal PE.

The PID repair circuit includes DC power supply 5 and isolation circuit 6. After the DC power supply 5 is processed by the isolation circuit 6, negative terminal GV- connected to a negative electrode of the DC power supply 5 is connected to the positive terminal PV+ of the solar cell module 1, and positive terminal GV+ connected to a positive electrode of the DC power supply 5 is connected to the ground terminal PE. A connection point where the negative terminal GV- is connected to the positive terminal PV+ is denoted as a repair access point of the PID repair circuit, and a first switch is disposed on a connection path between the solar cell module 1 and the inverter circuit 4. In this embodiment, the first switch is connected in series on a first connection path between the repair access point and the inverter circuit 4.

In this embodiment, in order to safely and efficiently extract charges at a solar panel, capacitor C1 is connected between the negative terminal GV- and the positive terminal GV+, and switch K2, switch K3, and resistor R1 are further disposed for convenient and safe control. Specifically, the negative terminal GV- is connected to a first terminal of the switch K2 and a first terminal of the capacitor C1. The positive terminal GV+ is connected to a second terminal of the capacitor C1 and a first terminal of the switch K3. A second terminal of the switch K2 is connected to the positive terminal PV+ of the solar cell module 1. A second terminal of the switch K3 is connected to a first terminal of the resistor R1. A second terminal of the resistor R1 is connected to the ground terminal PE.

During PID repair of the solar cell module 1 of the PV system, the switch K2 and the switch K3 are controlled to be closed, and the first switch is controlled to be open. In this way, a path from the negative terminal GV- connected to the negative electrode of the DC power supply 5 to the positive terminal PV+ of the solar cell module 1 and a path from the capacitor C1 to the ground terminal PE are formed, thereby forming a PID repair loop of the solar cell module 1, and the resistor R1 plays a role of safety protection.

During repair, the first switch remains open, such that a connection path between the solar cell module 1 and the energy storage module 2 as well as the inverter circuit 4 can be disconnected, thereby preventing a short circuit from being caused inside the PID repair circuit by grounding. Even if an AC output is generated by DC-to-AC conversion of the inverter circuit 4, operation of the PID repair circuit is not affected, thereby effectively protecting the operational safety of the PID repair circuit.

### Embodiment 9:

This embodiment describes a PID repair circuit for a PV system. Compared with Embodiment 7, a main difference lies in a different position of the repair access point and different switches included in the first switch and positions thereof.

Specifically, as shown in FIG. 8, the repair access point is located on a DC bus between an output side of the DC conversion circuit 3 and the bus capacitor C2, and the first connection path is located between the repair access point and the energy storage module 2. Correspondingly, the position of the switch K11 in Embodiment 1 no longer meets requirements. The first switch in this embodiment may be disposed at the position where the switch K12 or the switch K13 is located. In this case, the switch K12 is disposed between the DC conversion circuit 3 and the bus capacitor C2, and the switch K13 is disposed between the bus capacitor C2 and the energy storage module 2. As long as the first switch is disposed at any one of the two positions, namely the switch K12 and the switch K13, when the first switch is open, the connection between the repair access point and the energy storage module 2 as well as the inverter circuit 4 can be disconnected.

### Embodiment 10:

This embodiment describes a PID repair circuit for a PV system. Compared with Embodiment 7, a main difference lies in a different position of the repair access point and different switches included in the first switch and positions thereof.

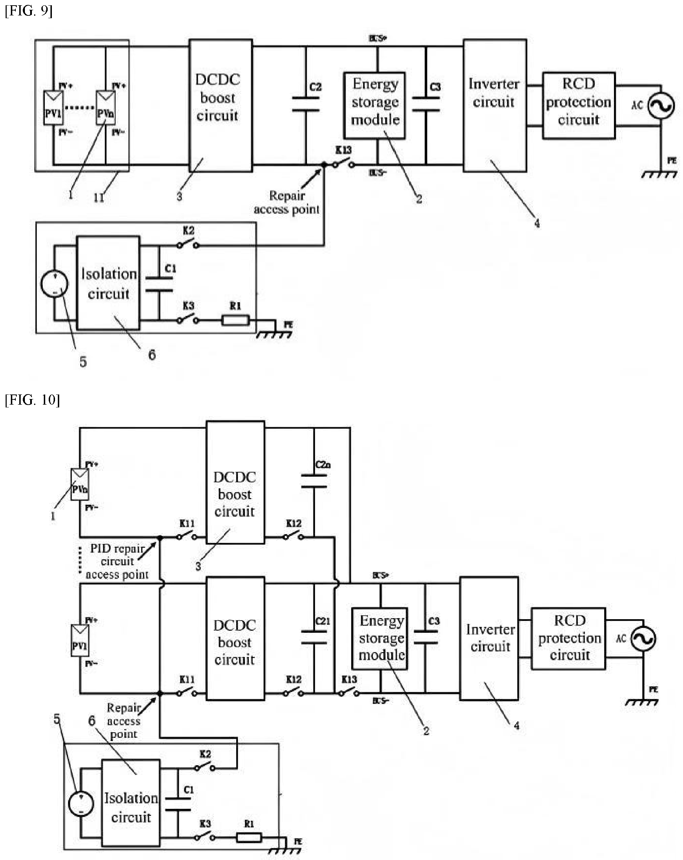

Specifically, as shown in FIG. 9, the repair access point is located on a DC bus between the bus capacitor C2 and the energy storage module 2, and the first connection path is located between the repair access point and the energy storage module 2. Correspondingly, the scheme of disposing the first switch at the position of the switch K11 or the switch K12 in Embodiment 1 no longer meets requirements. In this embodiment, the first switch is only disposed at the position of the switch K13, and the switch K13 is located between the bus capacitor C2 and the energy storage module 2. The connection between the repair access point and the energy storage module 2 as well as the inverter circuit 4 can be disconnected by opening the first switch at the position of the switch K13.

### Embodiment 11:

This embodiment describes a PID repair circuit for a PV system. Compared with Embodiment 7, a main difference lies in that a plurality of DC conversion circuits 3 are provided. One or more solar cell modules 1 are connected in parallel or in series to form solar cell string 11. Each solar cell string 11 is connected to the DC conversion circuit 3 and then connected in parallel to a DC bus, and the DC bus is further connected to the inverter circuit 4. In addition, bus capacitor C2 is disposed at a rear end of each DC conversion circuit 3 and before the energy storage module 2.

As shown in FIG. 10, an output side of the PID repair circuit is connected to each solar cell string 11, such that a second connection path where each solar cell string 11 is connected to the inverter circuit 4 needs to be disconnected during repair. Therefore, the PID repair circuit for a PV system according to this embodiment includes a plurality of repair access points, and each repair access point is located on the second connection path between the solar cell string 11 and the inverter circuit 4. The first switch is disposed on the first connection path between each repair access point and the inverter circuit 4.

In this embodiment, each first switch includes at least one switch, and the first switch may be disposed at any positions of switch K11, switch K12, and switch K13 shown in FIG. 10. The switch K11 is disposed between the repair access point and the DC conversion circuit 3, the switch K12 is disposed between the DC conversion circuit 3 and a bus capacitor C2, and the switch K13 is disposed between the bus capacitor C2 and the energy storage module 2. As long as the first switch at any one of the three switch positions, namely the switch K11, the switch K12, and the switch K13, is open, the connection between the repair access point and the energy storage module 2 as well as the inverter circuit 4 can be disconnected.

### Embodiment 12:

This embodiment describes a PID repair circuit for a PV system. Compared with Embodiment 11, a main difference lies in a different position of the repair access point and different switches included in the first switch and positions thereof.

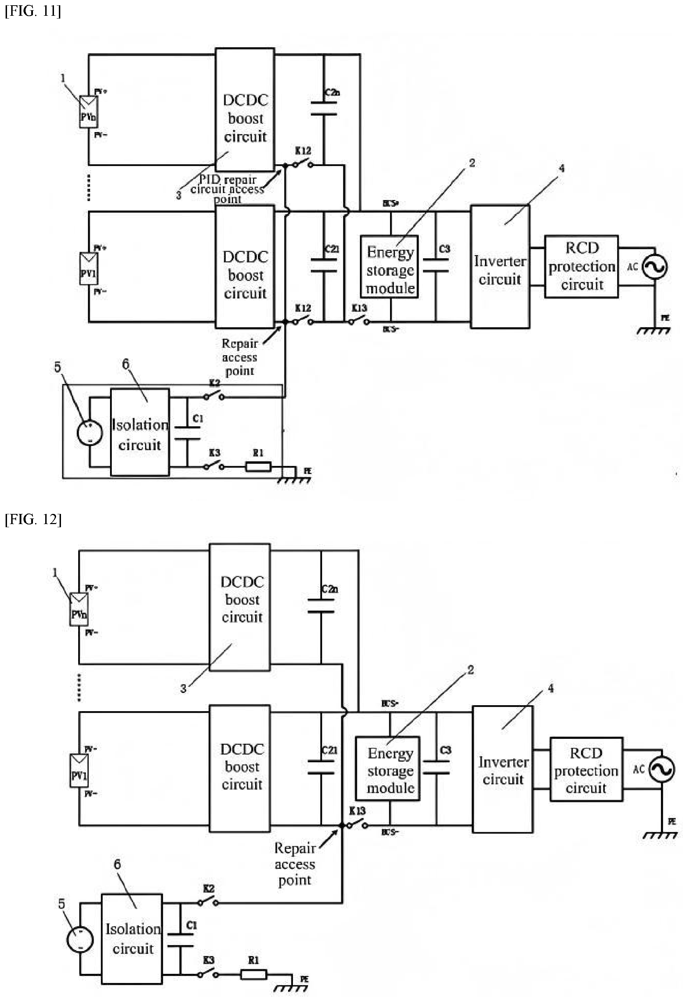

Specifically, as shown in FIG. 11, the repair access point is located on a DC bus between an output side of each DC conversion circuit 3 and the bus capacitor C2 connected, and the first connection path is located between the repair access point and the energy storage module 2. Correspondingly, the position of the switch K11 in Embodiment 5 no longer meets requirements. The first switch in this embodiment is only disposed at the position where the switch K12 or the switch K13 is located. In this case, the switch K12 is disposed between the DC conversion circuit 3 and the bus capacitor C2, and the switch K13 is disposed between the bus capacitor C2 and the energy storage module 2. As long as the first switch disposed at any one of the two positions namely the switch K12 and the switch K13 is open, the connection between the repair access point and the energy storage module 2 as well as the inverter circuit 4 can be disconnected.

### Embodiment 13:

This embodiment describes a PID repair circuit for a PV system. Compared with Embodiment 11, a main difference lies in a different position of the repair access point and different switches included in the first switch and positions thereof.

Specifically, as shown in FIG. 12, the repair access point is located on a DC bus between each bus capacitor C2 and the energy storage module 2 in a main loop, and the first connection path is located between the repair access point and the energy storage module 2. Correspondingly, the position of the switch K11 or the switch K12 in Embodiment 5 no longer meets requirements. In this embodiment, the first switch is disposed at the position of the switch K13, and the switch K13 is located between the bus capacitor C2 and the energy storage module 2. The connection between the repair access point and the energy storage module 2 as well as the inverter circuit 4 can be disconnected by opening the first switch at the position of the switch K13.

### Embodiment 14:

This embodiment describes a PID repair circuit for a PV system. Compared with Embodiment 11, a main difference lies in that a plurality of PID repair circuits are provided, each repair access point is connected to at least one PID repair circuit, and the first switch is disposed on a third connection path defined between a connection point of the DC conversion circuit 3 and the DC bus and the repair access point.

In this embodiment, in order to realize independent PID repair of each solar cell string 11, no switch serving as the first switch is disposed in the main loop, that is, the scheme of disposing the first switch at the position of the switch K13 in Embodiment 5 is cancelled.

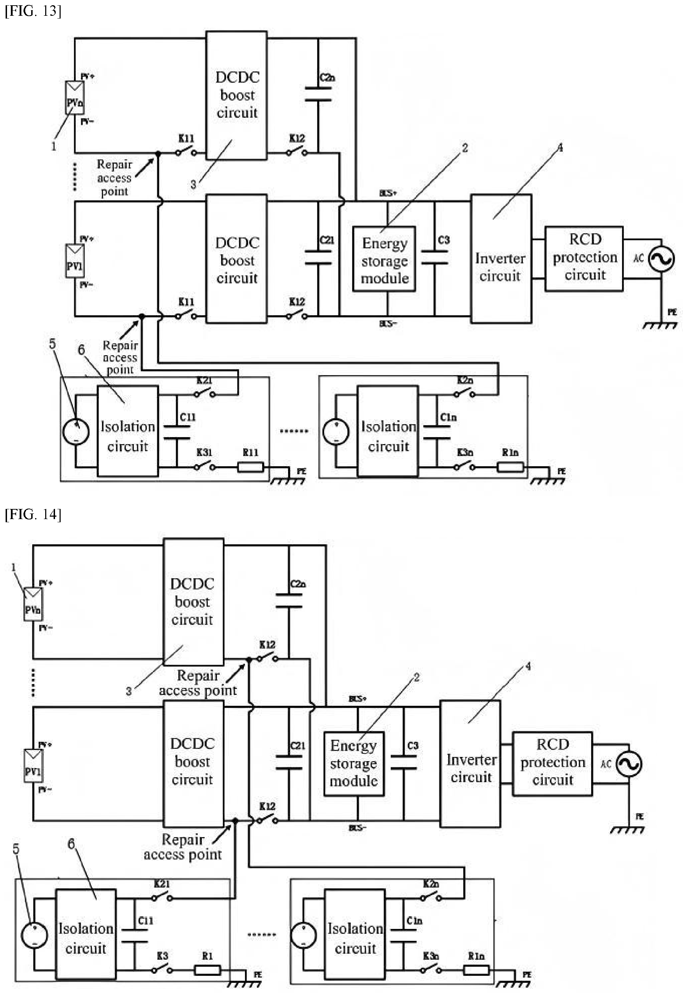

As shown in FIG. 13, each first switch in this embodiment includes at least one switch, and the first switch may be disposed at the position where the switch K11 or the switch K12 is located. In this case, the switch K11 is disposed between the repair access point and the DC conversion circuit 3, and the switch K12 is disposed between the DC conversion circuit 3 and the bus capacitor C2. As long as the first switch disposed at any one of the two switch positions, namely the switch K11 and the switch K12, is open, the connection between the repair access point and the energy storage module 2 as well as the inverter circuit 4 can be disconnected.

### Embodiment 15:

This embodiment describes a PID repair circuit for a PV system. Compared with Embodiment 14, a main difference lies in a different position of the repair access point and different switches included in the first switch and positions thereof.

Specifically, as shown in FIG. 14, each first switch in this embodiment is disposed at the position where the switch K12 is located. In this case, the switch K12 is disposed between the DC conversion circuit 3 and the bus capacitor C2. As long as the first switch disposed at the position of the switch K12 is open, the connection between the repair access point and the energy storage module 2 as well as the inverter circuit 4 can be disconnected.

In each of the above embodiments, the switch serving as the first switch may be any one of an electromagnetic relay, a DC contactor, an AC contactor, a semiconductor device IGBT or a MOSFET, and can receive an external control signal to disconnect the second connection path so as to disconnect the connection between the repair access point and the energy storage module 2 as well as the inverter circuit 4.

### Embodiment 16:

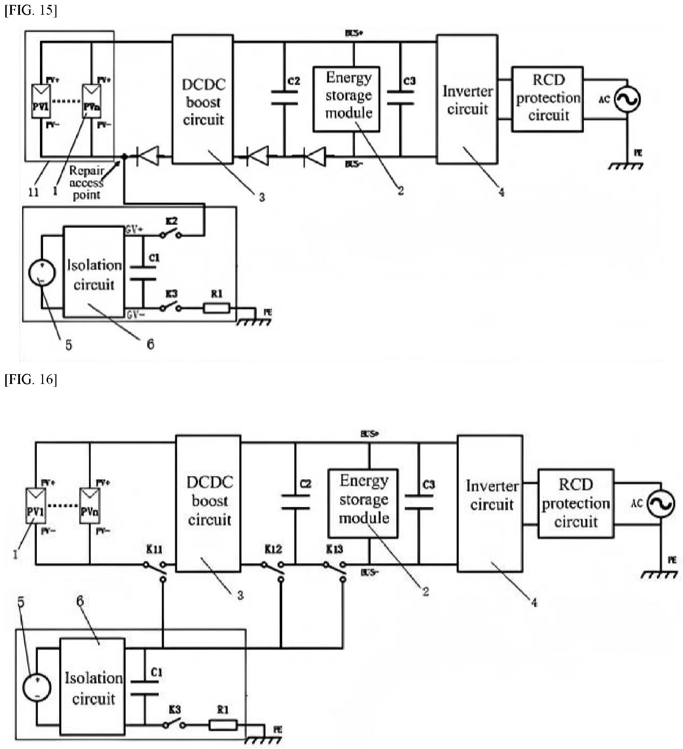

This embodiment describes a PID repair circuit for a PV system. Compared with Embodiment 7, a main difference lies in a different type of the first switch. In this embodiment, a diode is selected. As shown in FIG. 15, a unidirectional conduction diode is disposed at any one of the three positions, namely the switch K11, the switch K12, and the switch K13 in Embodiment 1, and the diode is configured to enable unidirectional conduction of the second connection path from the solar cell string 11 to the inverter circuit 4.

Specifically, as shown in FIG. 15, a negative electrode of the diode is connected to the repair access point (connected to the negative terminal PV- of the solar cell module 1), and a positive electrode of the diode is connected to the inverter circuit 4.

### Embodiment 17:

This embodiment describes a PID repair circuit for a PV system. Compared with Embodiment 7, a main difference lies in a different type of the first switch. In this embodiment, the switch selected as the first switch is a single-pole double-throw switch.

As shown in FIG. 16, each single-pole double-throw switch includes a static contact and two moving contacts. The static contact is connected to the solar cell module 1, one moving contact serves as the repair access point, and the other moving contact is connected to the inverter circuit 4. Through switching of the single-pole double-throw switch, during PID repair, only one switch shown in FIG. 16 needs to be switched from the moving contact connected to the inverter circuit 4 to the repair access point, such that while the connection to the PID repair circuit is enabled, the connection to the inverter circuit 4 is disconnected.

However, it can be understood that when the connection contact of one switch is changed, other switches on the connection path where the switch is connected to the solar cell module 1 need to be kept in an original state, so as to ensure the connection between the PID repair circuit and the solar cell module 1 during repair and guarantee the PID repair.

### Embodiment 18:

This embodiment describes a PID repair circuit for a PV system. Compared with Embodiment 13, a main difference lies in a different type of the first switch. In this embodiment, the switch selected as the first switch is a single-pole double-throw switch.

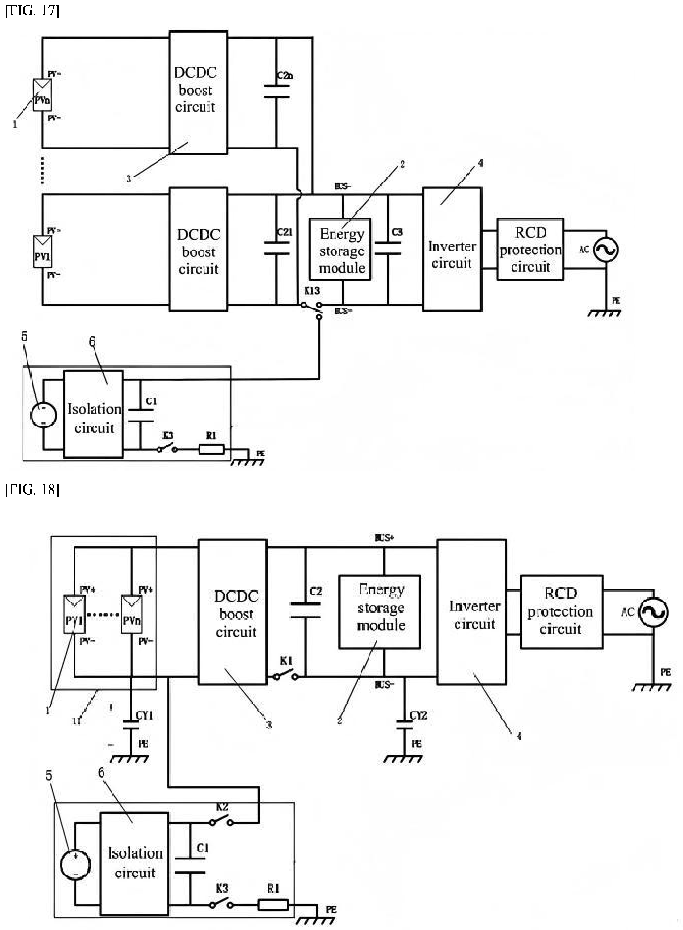

As shown in FIG. 17, each single-pole double-throw switch includes a static contact and two moving contacts. The static contact is connected to the solar cell module 1, one moving contact serves as the repair access point, and the other moving contact is connected to the inverter circuit 4. Through switching of the single-pole double-throw switch, during PID repair, only the switch K13 shown in FIG. 17 needs to be switched from the moving contact connected to the inverter circuit 4 to the repair access point, such that while the connection to the PID repair circuit is enabled, the connection to the inverter circuit 4 is disconnected.

### Embodiment 19:

This embodiment provides a PID repair circuit for a PV system, which is improved and optimized compared with Embodiment 7. The improvement lies in that the first switch is connected in parallel to a bleeder circuit configured to discharge the voltage across the first switch after PID repair is completed.

As shown in FIG. 18, after PID repair of the PID repair circuit for a PV system is completed, a residual voltage exists on common-mode capacitor CY1 between the negative terminal PV- of the solar cell module 1 and the ground, such that a high voltage is formed across the first switch K1. If the first switch K1 is closed in case of the high voltage, contact damage, increased contact impedance, and damage to the first switch K1 may be caused, thereby compromising reliability of the whole machine. Therefore, the voltage across the first switch K1 needs to be discharged to a relatively low level so as to close the first switch K1.

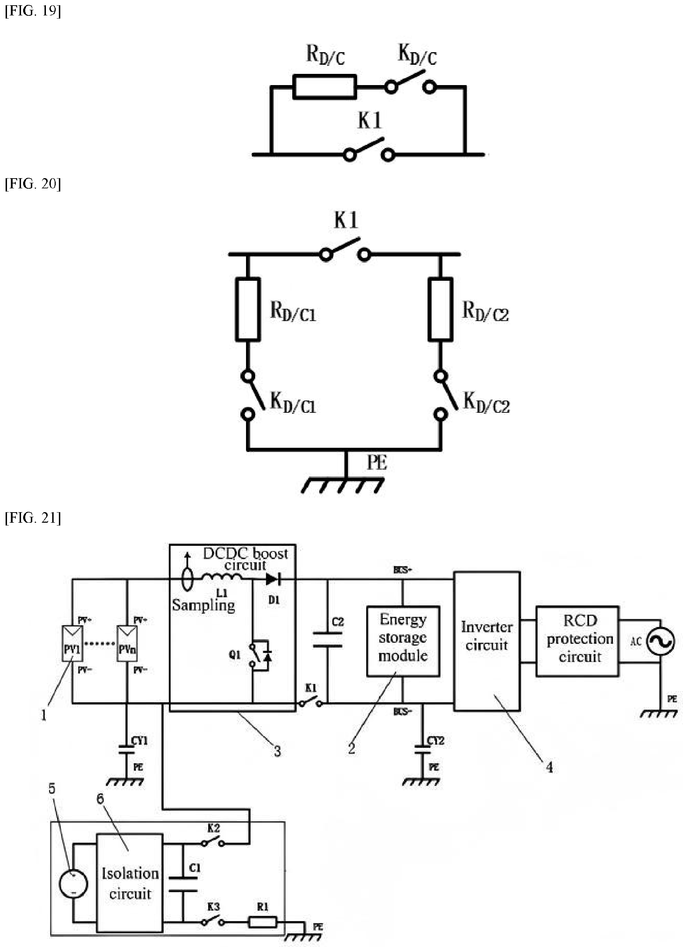

In an implementation, as shown in FIG. 19, the bleeder circuit includes a bleeder element and a bleeder switch, and the bleeder element is connected in series to the bleeder switch and then connected in parallel to the first switch. After the operation of the PID repair circuit is completed, the bleeder switch K_{D/C} is closed, and the common-mode capacitor CY1 discharges via resistor R_{D/C} serving as the bleeder element. The bleeder switch K_{D/C} may be operated according to one of the following three logics. (1) The bleeder switch K_{D/C} is opened after a preset duration threshold. (2) The bleeder switch K_{D/C} is opened after the voltage across the first switch K1 is less than a preset voltage threshold. (3) The bleeder switch K_{D/C} is kept closed until the first switch K1 is closed. The bleeder switch K_{D/C} is a small-current switch with high voltage resistance, and may be an electromagnetic relay, a solid-state relay, a DC/AC contactor, a semiconductor device (such as IGBT, MOSFET, or thyristor), or a combination of the above switch types, etc.

In another implementation, as shown in FIG. 20, the bleeder circuit is connected across the first switch K1, with a connection to the ground terminal PE. Specifically, the bleeder circuit includes two bleeder elements and two bleeder switches. One end of a first bleeder branch formed by connecting resistor R_{D/C1} serving as one bleeder element in series to one bleeder switch K_{D/C1} is connected to one end of the first switch, and another end of the first bleeder branch is grounded. One end of a second bleeder branch formed by connecting resistor R_{D/C2} serving as the other bleeder element in series to the other bleeder switch K_{D/C2} is connected to another end of the first switch, and another end of the first bleeder branch is grounded. After operation of the PID repair circuit is completed, the bleeder switch K_{D/C1} and the bleeder switch K_{D/C1} are closed, and the common-mode capacitor CY1 discharges via the resistor R_{D/C1} and the resistor R_{D/C2} serving as bleeder elements. The bleeder switch K_{D/C1} and the bleeder switch K_{D/C2} may be operated according to one of the following three logics. (1) The bleeder switch K_{D/C1} and the bleeder switch K_{D/C2} are opened after a preset duration threshold. (2) The bleeder switch K_{D/C1} and the bleeder switch K_{D/C2} are opened after the voltage across the first switch K1 is less than a preset voltage threshold. (3) The bleeder switch K_{D/C1} and the bleeder switch K_{D/C2} are kept closed until the first switch K1 is closed.

In the above two implementations, the bleeder element is a resistor, but other loads or elements capable of consuming residual voltage may also be used. In other words, typically, the bleeder element is a resistor. The bleeder switch is a small-current switch with high voltage resistance, and may be an electromagnetic relay, a solid-state relay, a DC/AC contactor, a semiconductor device (such as IGBT, MOSFET, or thyristor), and a combination of the above switch types, etc. In addition, no bleeder switch may be provided, that is, the bleeder switch is short-circuited, and the voltage across the first switch K1 is discharged only by means of the bleeder resistor R_{D/C}.

In another implementation, the bleeder circuit absorbs the voltage across the first switch via an inductor in the DC conversion circuit 3, and discharges energy to a bus capacitor. As shown in FIG. 21, taking a boost circuit in the DC conversion circuit 3 as an example, energy of the common-mode capacitors CY1 and CY2 is transferred to the bus capacitor C2. After switch Q1 in the boost circuit is closed, the common-mode capacitors CY1 and CY2 transfer energy to the inductor L1, and after the switch Q1 is opened, the energy on the inductor L1 is transferred to the bus capacitor C2.

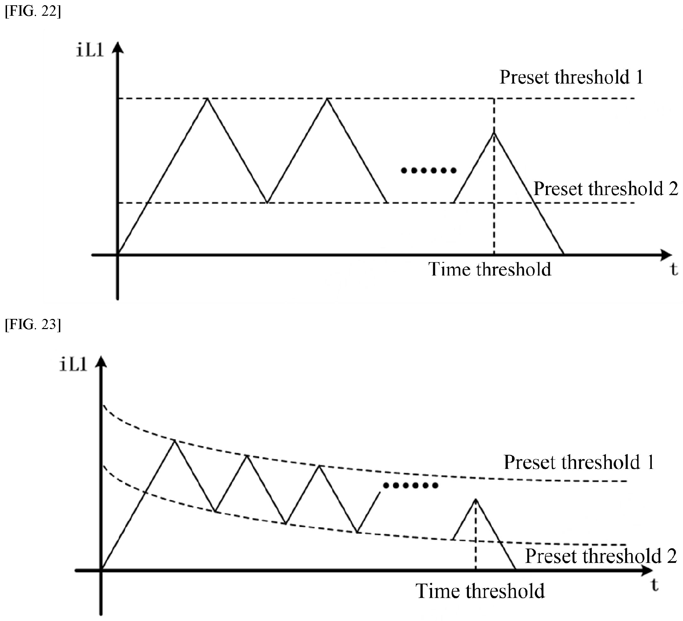

In this process, the current of the inductor L1 is detected, and the gradual discharge of the voltage across the first switch K1 is realized through monitoring control between an upper preset threshold and a lower preset threshold, so as to realize closed-loop current control. As shown in FIG. 22, when the current of the inductor L1 does not reach preset threshold 1, the switch Q1 is closed. When the current of the inductor L1 rises to the preset threshold 1, the switch Q1 is opened. When the current of the inductor L1 drops to preset threshold 2, the switch Q1 is closed. The process is repeated until the switch Q1 is opened after the current drops to a small value, or the switch Q1 is opened after a discharge duration reaches a duration threshold. During operation, as time goes by, the energy transferred to the bus capacitor C2 increases gradually, and the transfer speed slows down gradually. The closed-loop current control method makes full use of the energy transfer capability of the inductor L1 through closed-loop control, and can effectively improve the energy transfer speed in a later period.

In addition, the above preset threshold 1 and preset threshold 2 may also change with time and change correspondingly according to a preset curve, as shown in FIG. 23, which allows for a smoother discharge process and improves the charging rate of the bus capacitor C2.

### Embodiment 20:

This embodiment describes a PID repair method for a PV system, which is based on the PID repair circuit for a PV system according to any one of the above embodiments, and includes following working steps.

The first switch is opened based on a control instruction for starting PID repair.

An output voltage is detected in real time, the output voltage is increased until a target voltage value is reached, and the output voltage is maintained to perform the PID repair on the solar cell module 1.

The bleeder circuit is started after it is determined that PID repair is completed, and the first switch is closed after it is determined that discharge is completed.

The triggering of the control instruction for starting PID repair may be based on current detection and comparison on the first switch K1 or an element connected in series therewith, or may be based on voltage detection and comparison of an output voltage of the solar cell module 1 or a DC bus voltage. Then PID repair is started, the first switch K1 is opened, and a subsequent working process is executed. Specifically, the following situations are included.
(1) It is determined whether the current through the first switch K1 is zero or less than a certain threshold. If so, a next step is executed.
(2) It is determined whether the current on the element connected in series to the first switch K1 is zero or less than a certain threshold. If so, a next step is executed.
(3) It is determined whether a voltage of a solar PV module is lower than the DC bus voltage and the DC conversion circuit 3 stops operating. If so, a next step is executed.
(4) It is determined whether the DC bus voltage is lower than a certain threshold. If so, a next step is executed.

If any one of the above four situations exists, the control instruction for starting PID repair is sent.

The PID repair circuit keeps detecting the output voltage during operation, compares the output voltage with an output reference voltage, and increases the output reference voltage by a preset voltage step if a difference between the output voltage and the output reference voltage is within a range of a voltage threshold, until the output voltage reaches the target voltage value.

In addition, timing is performed for a process in which the output voltage follows the output reference voltage. If the process in which the output voltage follows the output reference voltage reaches a preset follow-up duration threshold, that is, the output voltage still fails to reach the preset target voltage value after the preset follow-up duration expires, a fault instruction is sent, and the PID repair process is stopped.

A condition for determining that PID repair is completed is that after the output voltage or the output reference voltage reaches the target voltage value, a duration for maintaining operation of the PID repair circuit is timed until a repair duration reaches a preset maintenance duration threshold.

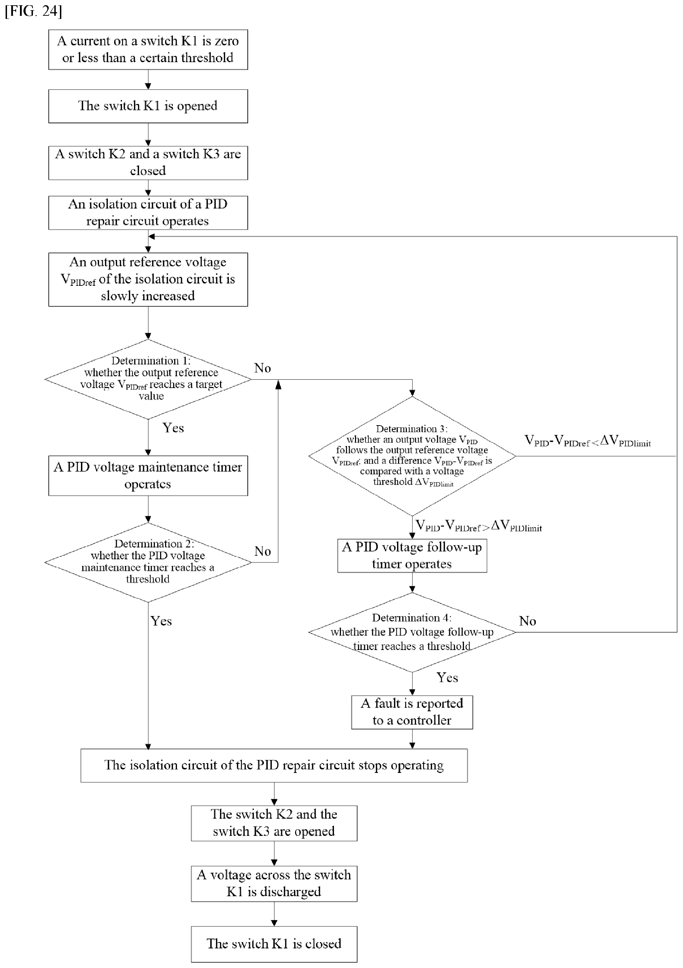

As shown in FIG. 24, after the first switch K1 is opened, the switch K2 and the switch K3 in the PID repair circuit are closed, and the isolation circuit 6 of the PID repair circuit starts to operate. The output reference voltage V_{PIDref} of the isolation circuit 6 is slowly increased, and whether the output reference voltage V_{PIDref} reaches a target value is determined.

If the output reference voltage V_{PIDref} reaches the target value, a PID voltage maintenance timer starts to operate, and the output voltage of the PID repair circuit is maintained for repair. Meanwhile, a PID voltage limit timer keeps timing, and whether the PID voltage limit timer reaches a threshold is determined. If the count of the PID voltage limit timer reaches the threshold, the isolation circuit 6 stops operating, then the switch K2 and the switch K3 are opened, the voltage across the first switch K1 is discharged, and finally the first switch K1 is closed.

If the output reference voltage V_{PIDref} does not reach the target value, it is continuously determined whether output voltage VPID of the PID repair circuit can follow the output reference voltage V_{PIDref}, and a difference between the output voltage VPID and the output reference voltage V_{PIDref} is compared with voltage threshold ΔV_{PIDlimit}. If the difference between the output voltage VPID and the output reference voltage V_{PIDref} is greater than the voltage threshold ΔV_{PIDlimit}, a PID voltage follow-up timer starts to operate, and whether the PID voltage limit timer reaches a threshold is determined. If the threshold is reached, a fault is reported to a controller and the isolation circuit 6 stops operating. Otherwise, the output voltage of the isolation circuit 6 is slowly increased, and the output reference voltage V_{PIDref} is increased, such that the output voltage VPID follows the output reference voltage V_{PIDref}.

The operation logic of the PID repair method for a PV system according to this embodiment can realize soft start of the PID repair circuit and reduce an impact on the DC conversion circuit 3. On the other hand, it can detect an abnormal output voltage of the PID repair circuit, thereby enabling fault detection and protection. In summary, the PID repair circuit and the PID repair method for a PV system according to the present disclosure are simple in circuit structure. They can physically disconnect the connection between the solar cell module 1 and the inverter circuit 4 during PID repair, such that internal short circuit caused by the inverter circuit 4 can be prevented during PID repair, thereby effectively guaranteeing the operational safety of the PV system.

The aforementioned embodiments are provided merely to illustrate the technical concept and features of the present disclosure, for the purpose of enabling those skilled in the art to understand the content of the present disclosure and implement the same accordingly, and shall not be construed as limiting the protection scope of the present disclosure. Any equivalent changes or modifications made in accordance with the spirit and essence of the present disclosure shall fall within the protection scope of the present disclosure.

## Claims

1. A potential induced degradation (PID) repair circuit for a photovoltaic (PV) system, wherein the PV system comprises a solar cell module, an energy storage module, an isolation circuit, and an inverter circuit; a direct current (DC) output of the solar cell module is connected to the inverter circuit via a DCDC boost circuit to form an alternating current (AC) output; the energy storage module is connected to the inverter circuit to form an AC output; the PID repair circuit comprises a DC power supply and an isolation circuit; after the DC power supply is processed by the isolation circuit, one end of the isolation circuit is connected to a positive terminal PV+ or a negative terminal PV-of the solar cell module, and another end of the isolation circuit is connected to a ground terminal PE; and a first switch is disposed on a connection path between the DCDC boost circuit and the energy storage module.

2. The PID repair circuit for the PV system according to claim 1, wherein an output side of the PID repair circuit is connected to the positive terminal PV+ or the negative terminal PV- of the solar cell module, with a connection point denoted as a repair access point of the PID repair circuit; and the first switch is disposed on a first connection path between the repair access point and the energy storage module.

3. The PID repair circuit for the PV system according to claim 2, wherein the PV system comprises at least one solar cell string; each solar cell string comprises one solar cell module or at least two solar cell modules connected in series or in parallel; each solar cell string is connected to the DCDC boost circuit via a DC bus; and the repair access point is located on a second connection path between the solar cell string and the energy storage module.

4. The PID repair circuit for the PV system according to claim 3, wherein the PV system comprises at least one DCDC boost circuit; each solar cell string is connected to a respective DCDC boost circuit and then connected in parallel to a DC bus; the DC bus is further connected to the energy storage module; the output side of the PID repair circuit is connected to each solar cell string, thereby forming a plurality of repair access points; and each of the repair access points is located on the second connection path between the solar cell string and the energy storage module.

5. The PID repair circuit for the PV system according to claim 4, wherein there are a plurality of PID repair circuits; each of the repair access points is connected to at least one PID repair circuit; and the first switch is disposed on a third connection path defined between a connection point of a DC conversion circuit and the DC bus and the repair access point.

6. The PID repair circuit for the PV system according to claim 1, wherein the first switch is connected in parallel to a bleeder circuit configured to discharge a voltage across the first switch after PID repair is completed.

7. The PID repair circuit for the PV system according to claim 6, wherein the bleeder circuit comprises at least one bleeder element; and each bleeder element is connected in series and then connected in parallel to the first switch; and
alternatively, a bleeder switch is connected in series in a connection path formed by connecting each bleeder resistor in series.

8. The PID repair circuit for the PV system according to claim 6, wherein the bleeder circuit comprises at least two bleeder elements; a first bleeder branch formed by connecting at least one bleeder element in series comprises one end connected to one end of the first switch and another end grounded; and a second bleeder branch formed by connecting at least one bleeder element in series comprises one end connected to another end of the first switch and another end grounded; and
alternatively, a bleeder switch is connected in series in the first bleeder branch or the second bleeder branch.

9. The PID repair circuit for the PV system according to claim 6, wherein the bleeder circuit is configured to absorb the voltage across the first switch via an inductor in the DCDC boost circuit and discharge energy to a bus capacitor.

10. The PID repair circuit for the PV system according to claim 1, wherein the first switch is a unidirectional conduction device configured to enable unidirectional conduction of a second connection path from a solar cell string to the energy storage module.

11. The PID repair circuit for the PV system according to claim 1, wherein the first switch is an electromagnetic relay, a DC contactor, an AC contactor, a semiconductor device insulated gate bipolar transistor (IGBT) or a metal-oxide-semiconductor field-effect transistor (MOSFET).

12. The PID repair circuit for the PV system according to claim 1, wherein the first switch is a single-pole double-throw switch, and comprises one static contact and two moving contacts; and the static contact is connected to the solar cell module, one moving contact serves as the repair access point, and the other moving contact is connected to the energy storage module.

13. The PID repair circuit for the PV system according to claim 1, wherein the DC power supply comprises a positive electrode connected to the negative terminal PV- of the solar cell module and a negative electrode connected to the ground terminal PE.

14. The PID repair circuit for the PV system according to claim 13, wherein the first switch is connected in series on a DC bus where the positive terminal PV+ or the negative terminal PV- of the solar cell module is connected to the energy storage module, or on a DC bus where the positive terminal PV+ or the negative terminal PV- of the solar cell module is connected to the DCDC boost circuit.

15. The PID repair circuit for the PV system according to claim 1, wherein the DC power supply comprises a negative electrode connected to the positive terminal PV+ of the solar cell module and a positive electrode connected to the ground terminal PE.

16. The PID repair circuit for the PV system according to claim 15, wherein the first switch is connected in series on a DC bus where the positive terminal PV+ or the negative terminal PV- of the solar cell module is connected to the energy storage module, or on a DC bus where the positive terminal PV+ or the negative terminal PV- of the solar cell module is connected to the DCDC boost circuit.

17. The PID repair circuit for the PV system according to claim 1, wherein the DC power supply is connected to the positive or negative terminal of the solar cell module via a connection branch; and the connection branch is provided with a second switch and a third switch configured to control on and off of the connection branch.

18. A PID repair method for a PV system, wherein PID repair is performed on a solar cell module by applying a negative voltage to a positive terminal PV+ of the solar cell module or a positive voltage to a negative terminal PV- of the solar cell module via a DC power supply, and a connection path between the solar cell module and an inverter circuit is disconnected during PID repair.

19. The PID repair method for the PV system according to claim 18, comprising following working steps:
opening a first switch based on a control instruction for starting the PID repair;
detecting, by a PID repair circuit, an output voltage of the PID repair circuit in real time during operation, increasing the output voltage until a target voltage value is reached,
and maintaining the output voltage to perform the PID repair on the solar cell module; and
starting a bleeder circuit after determining that the PID repair is completed, and closing an isolation switch after determining that discharge is completed.

20. The PID repair method for the PV system according to claim 19, wherein the PID repair circuit keeps detecting the output voltage during operation, compares the output voltage with an output reference voltage, and increases the output reference voltage by a preset voltage step if a difference between the output voltage and the output reference voltage is within a range of a voltage threshold, until the output voltage reaches the target voltage value.

21. The PID repair method for the PV system according to claim 20, wherein a process of the output voltage following the output reference voltage is detected; PID voltage follow-up timing is started if the difference between the output voltage and the output reference voltage exceeds the voltage threshold; a fault instruction is sent and the PID repair is stopped if a duration of the PID voltage follow-up timing reaches a preset follow-up duration threshold; and the output voltage continues to be increased to follow the output reference voltage if the duration of the PID voltage follow-up timing does not reach the preset follow-up duration threshold.

22. The PID repair method for the PV system according to claim 19, wherein a condition for determining that the PID repair is completed is that after the output voltage or the output reference voltage reaches the target voltage value, timing is performed for a duration for maintaining operation of the PID repair circuit until a repair duration reaches a preset maintenance duration threshold.

23. The PID repair method for the PV system according to claim 18, wherein the energy storage module remains connected to the inverter circuit during the PID repair.
